# EUROPÄISCHE PATENTSCHRIFT

(11) **EP 1 141 861 B1**
(45) Veröffentlichungstag und Bekanntmachung des Hinweises auf die Patenterteilung: **11.09.2002**
(21) Anmeldenummer: 99964398.4
(22) Anmeldetag: 30.11.1999
(51) Int. Cl.: G06F 17/17

(54) **VERFAHREN ZUM SYNCHRONISIEREN VON MEHREREN DIGITALEN EINGANGSSIGNALEN**
METHOD FOR SYNCHRONIZING SEVERAL DIGITAL INPUT SIGNALS
PROCEDE DE SYNCHRONISATION DE PLUSIEURS SIGNAUX D'ENTREE NUMERIQUES

(30) Priorität: 23.12.1998 DE 19860720
(43) Veröffentlichungstag der Anmeldung: 10.10.2001
(73) Patentinhaber: SIEMENS AKTIENGESELLSCHAFT, 80333 München (DE)
(72) Erfinder: JURISCH, Andreas, D-16727 Schwante (DE)
(86) Internationale Anmeldenummer: DE9903881
(87) Internationale Veröffentlichungsnummer: WO00039703

(56) Entgegenhaltungen:
- EP-A- 0 605 895
- WO-A-92/17951

## Beschreibung

Die Erfindung bezieht sich auf ein Verfahren zum Synchronisieren von mehreren digitalen Eingangssignalen, die durch Abtasten mit jeweils einem eigenen Arbeitstakt gebildet sind.

Ein Verfahren dieser Art ist der europäischen Patentschrift EP 0 198 684 B1 entnehmbar. Nach diesem Verfahren arbeitet nämlich ein in dieser Patentschrift beschriebenes Differentialrelais zum Schützen einer elektrischen Energieübertragungsleitung, die an verschiedenen Stellen hinsichtlich des hindurchfließenden Stromes überwacht wird. Die Ströme an den verschiedenen Stellen der Energieübertragungsleitung werden in digitale Eingangssignale umgesetzt, indem ein Abtasten mit jeweils einem eigenen Arbeitstakt an den verschiedenen Stellen der zu überwachenden Energieversorgungsleitung erfolgt; das Abtasten wird dabei an den verschiedenen Stellen nicht mit einem synchronen Takt vorgenommen, sondern mit schwach unterschiedlichen Taktfrequenzen. Zwischen den verschiedenen Stellen der Energieübertragungsleitung verläuft ein digitaler Übertragungskanal, über den von einem Erfassungsgerät (Master) an einer Stelle der Energieversorgungsleitung eine aufrufende Nachricht zu einer anderen Stelle übertragen wird, wobei die aufrufende Nachricht auch Daten enthält, die einen Hinweis über den Abtastzeitpunkt an der einen Stelle geben. Auf die aufrufende Nachricht hin wird von einem Erfassungsgerät (Slave) an der anderen Stelle der Energieübertragungsleitung ein Rücksignal ausgesendet, das unter anderem die Information über den Abtastzeitpunkt im Master und über eine Zeitdifferenz zwischen dem letzten Abtastzeitpunkt im Slave und dem nachfolgenden Empfangszeitpunkt der aufrufenden Nachricht im Slave enthält. Aus dem vom Master empfangenen Rücksignal wird im Master auf den zeitlichen Versatz der Abtastzeitpunkte an den beiden verschiedenen Stellen der Energieübertragungsleitung geschlossen und nach einer Vektortransformation der empfangenen Daten durch eine entsprechende Zeigerdrehung der Zeitversatz hinsichtlich der unterschiedlichen Abtastzeitpunkte ausgeglichen.

Der Erfindung liegt die Aufgabe zugrunde, ein Verfahren zum Synchronisieren von mehreren digitalen Eingangssignalen so fortzuentwickeln, daß es sich vergleichsweise einfach und zuverlässig ohne die Notwendigkeit der Bildung von Zeigergrößen durchführen läßt.

Zur Lösung dieser Aufgabe werden bei einem Verfahren der eingangs angegebenen Art erfindungsgemäß durch Abtasten der digitalen Eingangssignale mit einem gemeinsamen Nachbearbeitungstakt digitale Hilfssignale gebildet, wobei ein Nachbearbeitungstakt verwendet wird, der mindestens doppelt so schnell wie der langsamste Arbeitstakt ist; mittels Interpolieren jedes digitalen Hilfssignals werden synchronisierte digitale Ausgangssignale gebildet, die den digitalen Eingangssignalen entsprechen.

Ein wesentlicher Vorteil des erfindungsgemäßen Verfahrens besteht darin, daß mit ihm das Synchronisieren von mehreren digitalen Eingangssignalen auch dann möglich ist, wenn diese Eingangssignale aus analogen Eingangssignalen durch Abtasten mit jeweils sehr unterschiedlichem Arbeitstakt gebildet sind. Von den zum Erzeugen der Arbeitstakte erforderlichen Taktgebern sind daher zum Durchführen des erfindungsgemäßen Verfahrens nur relativ niedrige Ansprüche zu erfüllen. Außerdem stellt das erfindungsgemäße Verfahren relativ bescheidene Ansprüche an die Qualität der Übertragungskanäle. Ein weiterer wichtiger Vorteil besteht darin, daß das erfindungsgemäße Verfahren relativ einfach durchführbar ist, weil das Abtasten digitaler Eingangssignale mit einem gemeinsamen Nacharbeitungstakt und das Interpolieren der so gebildeten digitalen Hilfsgrößen für sich betrachtet gängige Maßnahmen sind.

Das erfindungsgemäße Verfahren läßt sich mit hinreichender Genauigkeit dann durchführen, wenn die digitalen Eingangsgrößen sinus- bzw. cosinus-förmige Signale sind. Oft ist dies nicht der Fall, so daß dann relativ große Fehler in Kauf genommen werden müssen. Wenn dies im Hinblick auf die gegebenen Anforderungen nicht akzeptabel ist, dann erscheint es gemäß einer Weiterbildung der Erfindung vorteilhaft, wenn die digitalen Eingangssignale vor ihrer Abtastung mit dem gemeinsamen Nachbearbeitungstakt mit einem Filter mit einer Charakteristik gefiltert werden, die invers zur Charakteristik eines zum Interpolieren verwendeten Interpolationsfilters ist. Bei dieser Ausführungsform des erfindungsgemäßen Verfahrens ergibt sich auf der Übertragungsstrecke der digitalen Eingangsgrößen bis zur Bildung der digitalen Ausgangsgrößen eine Ubertragungscharakteristik mit dem Wert 1, wodurch digitale Ausgangsgrößen bildbar sind, die sehr genau den digitalen Eingangsgrößen entsprechen.

Bei dem erfindungsgemäßen Verfahren hat es sich als vorteilhaft erwiesen, wenn unmittelbar nach dem Interpolieren eine Filterung mit einem Antialiasingfilter vorgenommen wird, um eine Bandbreitenbegrenzung für ein mit den digitalen Ausgangssignalen zu beaufschlagendes Auswertegerät zu erzielen.

Die zu sychronisierenden digitalen Eingangssignale können sehr unterschiedlich gebildet sein. Beispielsweise können sie Ausgangssignale von Sensoren sein, die aus analogen Eingangsgrößen mittels jeweils individueller Taktgeber digitale Signale an ihrem Ausgang abgeben. Ferner können die digitalen Eingangssignale aus analogen Meßgrößen eines elektrischen Energieversorgungssystems durch Abtasten an verschiedenen Punkten des Energieversorgungssystems erzeugt sein. Als besonders vorteilhaft wird das erfindungsgemäße Verfahren angesehen, wenn die digitalen Eingangsgrößen aus mit jeweils einem eigenen Arbeitstakt abgetasteten Sekundärgrößen von Meßwandlern in einem elektrischen Energieversorgungssystem gewonnen werden. Dabei können die Meßwandler an verschiedenen Positionen z. B. in einem Umspannwerk angeordnet sein, oder auch als Bestandteil einer Differentialschutzanordnung an den Enden einer elektrischen Energieübertragungsleitung oder an äußeren Anschlüssen eines Generators oder Leistungstransformators gewonnen werden.

Sind die Meßwandler Rogowski-Meßwandler, dann werden die aus den Sekundärgrößen solcher Meßwandler gebildeten digitalen Eingangssignale direkt in die digitalen Hilfsgrößen umgesetzt, und es wird zum Interpolieren ein Integrator verwendet.

Zur weiteren Erläuterurg der Erfindung sind in
Figur 1 ein Ausführungsbeispiel einer Anordnung zum Durchführen des erfindungsgemäßen Verfahrens in Form eines Blockschaltbildes, in
Figur 2 ein Ausführungsbeispiel eines Filters zur Filterung der digitalen Eingangsgrößen, in
Figur 3 Charakteristik und Struktur des Filters nach Figur 2, in
Figur 4 ein Ausführungsbeispiel eines Interpolationsfilters und in
Figur 5 Charakteristik und Struktur des Filters nach Figur 4 dargestellt.

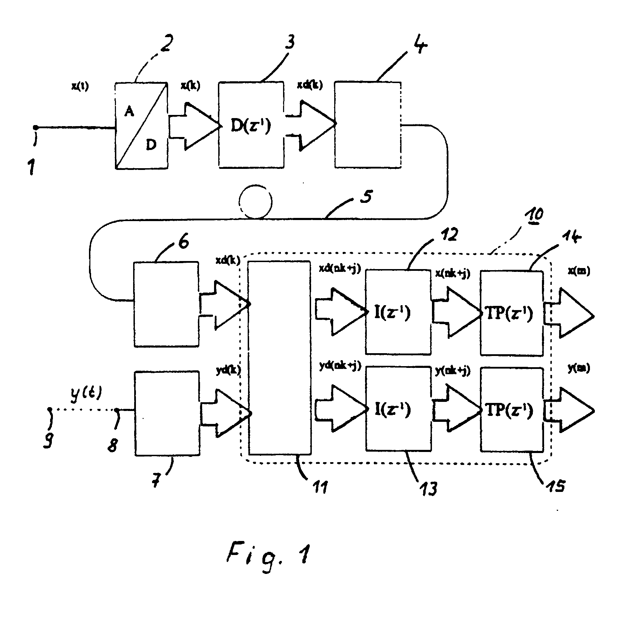

Wie die Figur 1 erkennen läßt, liegt an einem Eingang 1 einer Anordnung zur Durchführung des erfindungsgemäßen Verfahrens ein analoges Eingangssignal x(t) an, das in einem Analog-Digital-Umsetzer 2 in ein digitales Eingangssignal x(k) umgesetzt wird. Dieses digitale Eingangssignal x(k) durchläuft einen von einem Differentiator gebildeten Signalencoder 3, so daß am Ausgang des Signalencoders 3 eine Impulsfolge xd(k) entsteht, die durch Differentiation des digitalen Eingangssignals x(k) entstanden ist. Mittels einer Sendeeinrichtung 4 wird die Impulsfolge xd(k) über einen Ubertragungskanal 5 zu einer Empfangseinrichtung 6 übertragen, die ausgangsseitig die Impulsfolge xd(k) abgibt.

Die in Figur 1 dargestellte Anordnung enthält eine weitere Empfangseinrichtung 7, die mit ihrem Eingang 8 in einer Weise mit einem weiteren Eingang 9 der Anordnung verbunden ist, wie es im Zusammenhang mit der Empfangseinrichtung 6 in Bezug auf den Eingang 8 beschrieben worden ist. Die punktierte Darstellung soll einen Analog-Digital-Umsetzer entsprechend dem Analog-Digital-Umsetzer 2, einer. Signalencoder entsprechend dem Signalencoder 3, eine Senceeinrichtung entsprechend der Sendeeinrichtung 4 und einen Übertragungskanal entsprechend dem Übertragungskanal 5 beinhalten. Am Ausgang der weiteren Empfangseinrichtung 7 entsteht dann eine Impulsfolge yd(k), die er.tsprechend der Impulsfolge xd(k) aus dem Signal y(t) gewonnen ist.

Außer der Empfangseinrichtung 7 können weitere zusätzliche Empfangseinrichtunaen in gleicher Weise mit zusätzlichen Impulsfolgen beaufschlagt sein.

Ausgangsseitig ist an die Empfangseinrichtungen 6 und 7 ein Signaldecoder 10 angeschlossen, der eingangsseitig eine Resamplingeinrichtung 11 enthält. Diese Resamplingeinrichtung 11 kann so aufgebaut sein und so arbeiten, wie es in der US-Patentschrift 5,075,880 im einzelnen, insbesondere in Figur 5 dargestellt und im Zusammenhang damit beschreiben ist. In der Resamplingeinrichtung 11 werden also die digitalen Eingangssignale xd(k) und yd(k) jeweils für sich mit einem gemeinsamen Nachbearbeitungstakt der Resamplungseinrichtung abgetastet und dabei digitale Hilfssignale xd(nk+j) und yd(nk+j) durch Einfügen von Nullwerten gebildet. Dabei ist die Resamplingeinrichtung 11 hinsichtlich ihres Nachbearbeitungstaktes so ausgestaltet, daß dieser wenigstens dcppelt so schnell wie der schnellste Arbeitstakt bei der Bildung der digitalen Eingangssignale x(k) ist. Liegen beispielsweise die Abtastfrequenzen zur Gewinnung der digitalen Eingangssignale x(k) zwischen etwa 1 bis 40 kHz, dann kommt für den Nachbearbeitungstakt ein Frequenzbereich zwischen 10 und 500 kHz infrage; empfehlenswert sind ca. 200 kHz.

Die digitalen Hilfssignale xd(nk+j) und yd(nk+j) mit vergleichsweise hohem Nacharbeitungstakt werden jeweils einem Interpolationsfilter 12 bzw. 13 zugeführt, bei dem es sich in dem dargestellten Ausführungsbeispiel um jeweils einen Integrator handelt. Integratoren werden jeweils deshalb eingesetzt, weil als Signalencoder 3 Differentiatoren benutzt worden sind. Somit ergibt sich hinsichtlich der Funktionsweise des Signalencoders 3 und des Integrators 12 des Signaldecoders 10 eine Übertragungscharakteristik mit dem Wert 1.

Grundsätzlich kommen auch andere Interpolationsfilter infrage, z. B. Lagrange-Interpolatoren oder Spline-Interpolatoren.

Die am Ausgang der Integratoren 12 und i3 gebildeten Impulsfolgen x(nk+j) und y(nk+j) sind synchronisiert und werden jeweils einem Antialiasingfilter 14 und 15 zugeführt, mittels denen die Impulsfolgen auf die für die Verarbeitung in einem nicht dargestellten Auswertegerät erforderliche Bandbreite begrenzt werden. Es entstehen somit digitale Ausgangssignale x(m) am Ausgang des einen Antialisingfilters 14 und y(m) am Ausgang des anderen Antialisingfilters 15. Diese digitalen Ausgangssignale x(m) und y(m) können nun in bekannter Weise auf eine Abtastrate reduziert werden, wie sie für ein nicht dargestelltes Auswertegerät passend ist. Diese Abtastrate muß durch einen ganzzahligen Teiler aus der Abtastrate der Resamplingeinrichtung 11 entstehen. Bei den angenommenen Frequenzen liegen sinnvolle Werte hier zwischen 0,6 und 10 kHz für Anwendungsfälle bei der Überwachung von elektrischen Energieversorgungssystemen.

Sind x(t) und y(t) reine Sinus- oder Cosinussignale, dann kann jeweils auf den Signalencoder 3 verzichtet werden. Dies gilt auch bei nicht reinen Sinus- oder Cosinussignalen dann, wenn x(t) und y(t) Ausgangsgrößen von Rogowski-Wandlern sind, weil diese Ausgangsgrößen dem Differentialquotienten der Wandlereingangsgrößen entsprechen.

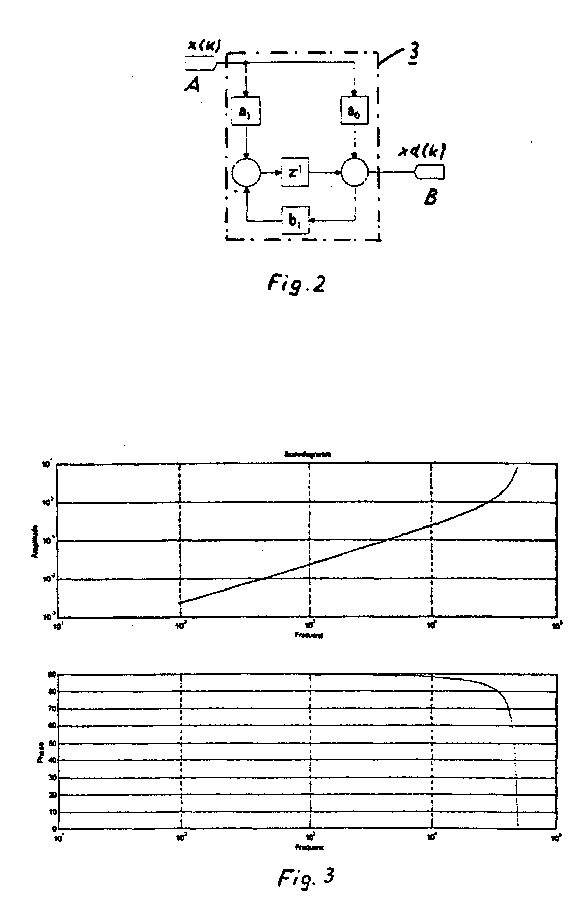

In Figur 2 ist ein Ausführungsbeispiel für einen Signalencoder 3 gemäß Figur 1 dargestellt, der als FIR-Filter mit Wirkung als Differentiator ausgebildet ist. Mit A ist hier der Eingang des Signalencoders und mit B der Ausgang bezeichnet. Aus dem digitalen Eingangssignal x(k) wird die Impulsfolge xd(k) gebildet. Die Koeffizienten a₀, a₁ und b₁ des Signalcoders 3 sind wie folgt bemessen:

| Koeffizient | Wert |
|---|---|
| a0 | 0.66666666666667 |
| a1 | -0.66666666666667 |
| b1 | 0.83333333333333 |

In der oberen Darstellung der Figur 3 ist der Amplitudenverlauf über der Frequenz des Signalencoders nach Figur 2 dargestellt, während in der unteren Darstellung der Figur 3 der Phasenverlauf über der Frequenz eines solchen Filters wiedergegeben ist.

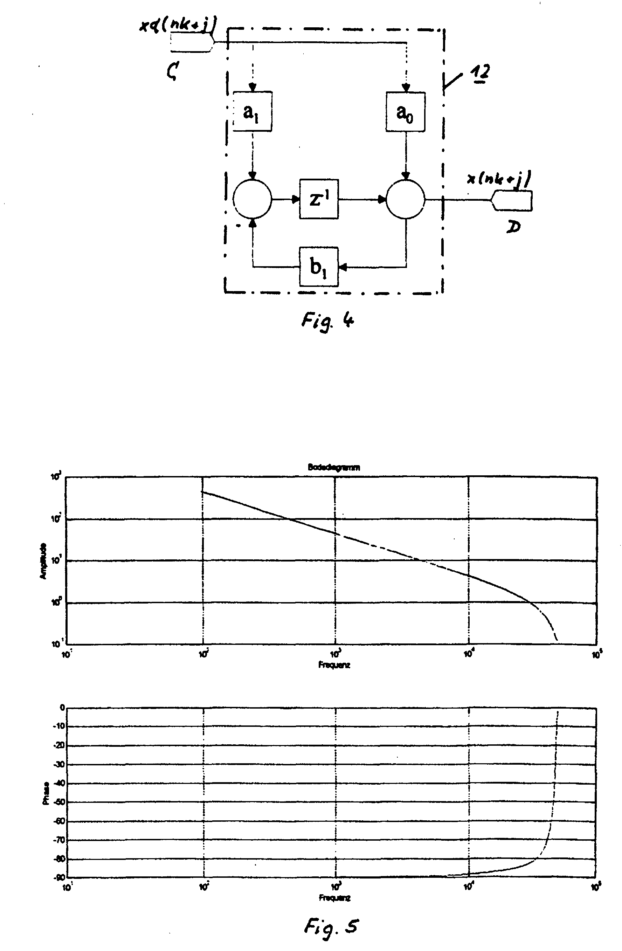

Die in Figur 4 dargestellte Interpolationseinrichtung 12 bzw. 13 gemäß Figur 1 zeigt ein FIR-Filter als Integrator mit Koeffizienten a₀, a₁, b₁ mit einer Bemessung, wie sie aus der nachstehenden Tabelle entnehmbar ist. Mit C ist der Eingang dieses FIR-Filters und mit D dessen Ausgang bezeichnet.

| Koeffizient | Wert |
|---|---|
| a0 | 1.50000000000000 |
| a1 | 1.25000000000000 |
| b1 | -1 |

In der oberen Darstellung der Figur 5 ist der Amplitudenverlauf über der Frequenz des Filters nach Figur 4 und in der unteren Darstellung der Figur 5 der Phasenverlauf über der Frequenz eines solchen Filters gezeigt. Es ist erkennbar, daß die Frequenzverläufe der Filter nach den Figuren 2 und 4 invers zueinander sind, was zu der angestrebten Übertragungsfunktion mit dem Wert 1 führt.

## Patentansprüche

1. Verfahren zum Synchronisieren von mehreren digitalen Eingangssignalen ((x(k)), die durch Abtasten mit jeweils einem eigenen Arbeitstakt gebildet sind,
**dadurch gekennzeichnet, daß**
- durch Abtasten der digitalen Eingangssignale (x(k)) mit einem gemeinsamen Nachbearbeitungstakt digitale Hilfssignale (xd(nk+j), yd(nk+j)) gebildet werden, wobei
- ein Nachbearbeitungstakt verwendet wird, der mindestens doppelt so schnell wie der schnellste Arbeitstakt ist, und
- mittels Interpolieren jedes digitalen Hilfssignals (xd(nk+j), yd(nk+j)) synchronisierte digitale Ausgangssignale (x(m), y(m)) gebildet werden, die den digitalen Eingangssignalen (x(k)) entsprechen.

2. Verfahren nach Anspruch 1,
**dadurch gekennzeichnet, daß**
- die digitalen Eingangssignale (x(k)) vor ihrer Abtastung mit dem gemeinsamen Nachbearbeitungstakt mit einem Filter (3) mit einer Charakteristik gefiltert werden, die invers zur Charakteristik eines zum Interpolieren verwendeten Interpolationsfilter (12, 13) ist.

3. Verfahren nach Anspruch 1 oder 2,
**dadurch gekennzeichnet, daß**
- unmittelbar nach dem Interpolieren eine Filterung mit einem Antialiasingfilter (14, 15) vorgenommen wird.

4. Verfahren nach einem der vorangehenden Ansprüche,
**dadurch gekennzeichnet, daß**
- die digitalen Eingangssignale aus mit jeweils einem eigenen Arbeitstakt abgetasteten Sekundärgrößen von Meßwandlern in einem elektrischen Energieversorgungssystem gewonnen werden.

5. Verfahren nach Anspruch 4,
**dadurch gekennzeichnet, daß**
- bei aus Sekundärgrößen von Rogowski-Meßwandlern gebildeten digitalen Eingangssignalen aus diesen Eingangssignalen direkt die digitalen Hilfssignale gebildet werden und
- zum Interpolieren ein Integrator verwendet wird.

## Claims

1. Method for synchronizing a plurality of digital input signals ((x(k)), which are formed by sampling with the aid of a dedicated operating clock in each case, **characterized in that**
- digital auxiliary signals (xd(nk+j), yd(nk+j)) are formed by sampling the digital input signals (x(k)) with the aid of a common postprocessing clock,
- use being made of a postprocessing clock which is at least twice as fast as the fastest operating clock, and
- synchronized digital output signals (x(m), y(m)) which correspond to the digital input signals (x(k)) are formed by means of interpolating each digital auxiliary signal (xd(nk+j), yd(nk+j)).

2. Method according to Claim 1, **characterized in that**
- before being sampled with the aid of the common postprocessing clock, the digital input signals (x(k)) are filtered with the aid of a filter (3) having a characteristic which is the inverse of the characteristic of an interpolation filter (12, 13) used for the interpolation.

3. Method according to Claim 1 or 2, **characterized in that**
- filtering with the aid of an antialiasing filter (14, 15) is undertaken directly after the interpolation.

4. Method according to one of the preceding claims, **characterized in that**
- the digital input signals are obtained from secondary variables, sampled with the aid in each case of a dedicated operating clock, of measuring transducers in an electric power supply system.

5. Method according to Claim 4, **characterized in that**
- in the case of digital input signals formed from secondary variables of Rogovsky measuring transducers the digital auxiliary signals are formed directly from these input signals, and
- an integrator is used for the interpolation.

## Revendications

1. Procédé pour la synchronisation de plusieurs signaux d'entrée numériques (x(k)) qui sont formés par échantillonnage avec respectivement une horloge de travail propre,
**caractérisé par le fait que**
- par échantillonnage des signaux d'entrée numériques (x(k)) avec une horloge de post-traitement commune, on forme des signaux auxiliaires numériques (xd(nk + j), yd(nk + j)),
- une horloge de post-traitement qui est au moins deux fois plus rapide que l'horloge de travail la plus rapide étant utilisée, et
- des signaux de sortie numériques synchronisés (x(m), y(m)) qui correspondent aux signaux d'entrée numériques (x(k)) étant formés au moyen d'une interpolation de chaque signal auxiliaire numérique (xd(nk + j), yd(nk + j)).

2. Procédé selon la revendication 1,
**caractérisé par le fait que**
- on filtre les signaux d'entrée numériques (x(k)), avant leur échantillonnage avec l'horloge de post-traitement commune, avec un filtre (3) ayant une caractéristique qui est l'inverse de la caractéristique d'un filtre d'interpolation (12, 13) utilisé pour l'interpolation.

3. Procédé selon la revendication 1 ou 2,
**caractérisé par le fait que**
- on effectue un filtrage avec un filtre antirepliement (14, 15) immédiatement après l'interpolation.

4. Procédé selon l'une des revendications précédentes,
**caractérisé par le fait que**
- on obtient les signaux d'entrée numériques à partir de grandeurs secondaires, échantillonnées avec respectivement une horloge de travail propre, de convertisseurs de mesure dans un système d'alimentation en énergie électrique.

5. Procédé selon la revendication 4,
**caractérisé par le fait que**,
- dans le cas de signaux d'entrée numériques formés à partir de grandeurs secondaires de convertisseurs de mesure de Rogowski, on forme les signaux auxiliaires numériques directement à partir de ces signaux d'entrée, et
- on utilise un intégrateur pour l'interpolation.
